# EUROPÄISCHE PATENTANMELDUNG

(11) **EP 1 548 358 A1**
(43) Veröffentlichungstag der Anmeldung: **29.06.2005**
(21) Anmeldenummer: 04030423.0
(22) Anmeldetag: 22.12.2004
(51) Int. Cl.: F21V 8/00, F21V 5/04, F21W 131/406, F21V 14/06, G02B 3/08, F21S 8/10, F21V 14/02

(54) **Stufenlinsenscheinwerfer mit gekoppelter Abstandsveränderung lichttechnischer Elemente**

(30) Priorität: 22.12.2003 DE 10361117; 19.03.2004 DE 102004014045
(71) Anmelder: Schott AG, 55122 Mainz (DE)
(72) Erfinder: Kittelmann, Rüdiger, 37574 Einbeck (DE); Wagener, Harry, 31061 Alfeld (DE)
(74) Vertreter: Herden, Andreas, Dipl.-Ing.

(57) **Zusammenfassung**

Um einen Stufenlinsenscheinwerfer mit einstellbarem Öffnungswinkel des austretenden Lichtbündels mit einem, vorzugsweise ellipsoiden Reflektor, einer Lampe und mindestens einer Stufenlinse bereitzustellen, der eine kompaktere Bauform aufweist und somit sowohl platzsparender als auch leichter als die herkömmlichen Stufenlinsenscheinwerfer ist, wird eine Linse mit negativer Brennweite und virtuellem Brennpunkt als Stufenlinse verwendet.

## Beschreibung

Die Erfindung betrifft einen Stufenlinsenscheinwerfer, mit einstellbarem Öffnungswinkel des austretenden Lichtbündels, mit einem Reflektor, einer Lampe und mindestens einer Stufenlinse.

Die lichttechnisch relevanten Teile bei gewöhnlichen Stufenlinsenscheinwerfern umfassen in der Regel eine Lampe, eine Stufenlinse (Fresnellinse) und einen sphärischen Hilfsreflektor. Herkömmlich befindet sich die Lampenwendel im Wesentlichen unveränderlich im Kugelmittelpunkt des sphärischen Reflektors. Dadurch wird ein Teil des von der Lampe abgestrahlten Lichts in diese zurückreflektiert und die Lichtabstrahlung in den vorderen Halbraum unterstützt. Dieses nach vorn gerichtete Licht wird durch die Stufenlinse gebündelt. Der Grad der Lichtbündelung ist jedoch von dem Abstand zwischen der Stufenlinse und der Lampe abhängig. Befindet sich die Lampenwendel im Brennpunkt der Stufenlinse, so ergibt sich die engste Lichtbündelung. Dadurch wird ein quasiparalleler Strahlengang, auch Spot genannt, erhalten. Durch Verkürzung des Abstandes zwischen der Stufenlinse und der Lampe wird der Öffnungswinkel des austretenden Lichtbündels stetig vergrössert. Dadurch wird ein divergierender Strahlengang, welcher auch Flood genannt wird, erhalten.

Nachteilig an derartigen Scheinwerfern ist jedoch die schlechte Lichtausbeute insbesondere in deren Spotstellung, da hier nur ein verhältnismässig kleiner Raumwinkelbereich der Lampe durch die Stufenlinse erfasst wird. Ausserdem wirkt es sich nachteilig aus, dass das von dem sphärischen Reflektor reflektierte Licht zu einem grossen Teil die Lampenwendel selbst wieder trifft, dort absorbiert wird und die Lampenwendel zusätzlich aufheizt.

Aus der DE 39 19 643 A1 ist ein Scheinwerfer mit einem Reflektor, einer Blende und einer Stufenlinse bekannt. Mit dem Scheinwerfer wird durch eine Verstellung der Lichtquelle die Ausleuchtung verändert. Dadurch wird eine Helligkeitsänderung des Lichtes bewirkt. Eine Abstandsregulierung zwischen Scheitelpunkt und Reflektor und zwischen der Blende und dem Reflektor dient der Helligkeitsregulierung.

Aus der DE 34 13 310 A1 ist ein Scheinwerfer mit einer Lampe und einem Reflektor oder einer Lampe und einer Sammellinse bekannt. Der Scheinwerfer weist weiter eine Streuscheibe oder einen Spiegel auf, die beide im Winkel von 45° positioniert sind. Durch den Spiegel wird das Licht abgelenkt und durch die Streuscheibe wird das Licht gestreut. Durch Verschieben der Streuscheibe werden unterschiedliche Abstrahlwinkel des Lichtbündels erzeugt.

Die DE 101 13 385 C1 beschreibt einen Stufenlinsenscheinwerfer, bei welchem die Stufenlinse eine Sammellinse ist, deren lichtquellenseitiger Brennpunkt sich in Spotstellung in etwa im reflektorfernen Brennpunkt des ellipsoiden Reflektors befindet. Somit addieren sich die Abstände der Brennpunkte des Reflektors, die Brennweite des Reflektors und die Brennweite der Stufenlinse zur Mindestlänge eines derartigen Stufenlinsenscheinwerfers.

Mit der Erfindung soll jedoch ein Stufenlinsenscheinwerfer geschaffen werden, der eine kompaktere Bauform aufweist und folglich sowohl platzsparender als auch leichter als die herkömmlichen Stufenlinsenscheinwerfer ist.

Diese Aufgabe wird auf überraschend einfache Weise mit einem Stufenlinsenscheinwerfer gemäss Anspruch 1 sowie einem Beleuchtungsset gemäss Anspruch 19 gelöst.

Durch Verwendung einer Stufenlinse mit negativer Brennweite, kann eine extrem kompakte Bauform erreicht werden, welche beispielsweise in Spotstellung des Stufenlinsenscheinwerfers im Wesentlichen nur noch der Länge des Reflektors zusammen mit der Dicke der jeweils verwendeten Stufenlinse entspricht.

Mit dem erfindungsgemässen Stufenlinsenscheinwerfer wird ein deutlich verbesserter Lichtwirkungsgrad insbesondere in Spot-, aber auch in Floodstellung erreicht.

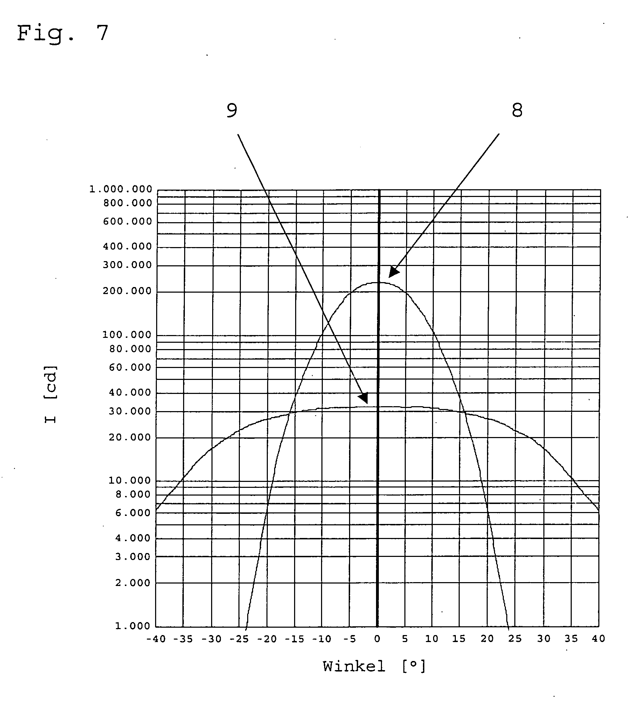

Gleichzeitig wird die Gleichmässigkeit der Beleuchtungsstärke im gesamten Lichtfeld erhalten, wie dieses beispielhaft aus Figur 7 sowohl für die Spot- als auch für eine Floodstellung dargestellt ist.

Erfindungsgemäss ist ein ellipsoider Reflektor mit grosser Apertur vorgesehen. Die Spotstellung wird dadurch eingestellt, dass sich die Lampenwendel eines Schwarzkörperstrahlers, insbesondere einer Halogenlampe oder der Entladungsbogen einer Entladungslampe im reflektorseitigen Brennpunkt des Ellipsoids befindet und der reflektorferne zweite Brennpunkt des Ellipsoids in etwa im negativen oder virtuellen reflektorfernen Brennpunkt der Stufenlinse angeordnet ist.

Das von dem Reflektor reflektierte Licht wird vor Eintritt in die Negativlinse nahezu vollständig auf den reflektorfernen Brennpunkt des Ellipsoids fokussiert. Die sich im reflektorseitigen Brennpunkt befindliche Lampenwendel oder der Entladungsbogen wird nach dem Hindurchtreten durch die Stufenlinse in das Unendliche abgebildet und deren Licht wird somit in einen nahezu paralleles Strahlenbündel überführt.

Das reflektierte Licht trifft im Wesentlichen nicht mehr die Lampenwendel oder den Entladungsbogen. Der virtuelle negative Brennpunkt der Stufenlinse fällt mit dem reflektorfernen Brennpunkt des Reflektorellipsoids zusammen und schafft hiermit eine extrem kompakte Bauform.

Bei zweckmässiger Wahl des Aperturwinklels von Reflektor und Stufenlinse wird das von dem Reflektor reflektierte Licht nahezu vollständig von der Stufenlinse erfasst und als enges Spot-Lichtbündel nach vorne abgestrahlt.

Die Lichtausbeute ist damit erheblich höher als bei einem herkömmlichen Stufenlinsenscheinwerfer.

Der Öffnungswinkel des aus der Stufenlinse austretenden Lichtbündels kann bei einer ersten Ausführungsform nahezu beliebig vergrössert werden, indem die Lampenposition in Bezug zum Reflektor einerseits und der Abstand der Stufenlinse zum Reflektor andererseits in geeigneter Weise verändert wird.

Damit die guten Eigenschaften herkömmlicher Stufenlinsenscheinwerfer in Bezug auf die Gleichmässigkeit der Beleuchtungsstärke erhalten bleiben, sollten diese Abstandsveränderungen durch eine zweckmässig gewählte Zwangskoppelung erfolgen.

Eine Ausführungsform der Erfindung besteht darin, dass der Ellipsoidreflektor aus einem metallischen oder transparenten Material besteht. Bevorzugt werden Glas und polymere Materialien bzw. Kunststoffe verwendet, welche vorteilhaft mit Metall, beispielsweise Aluminium, beschichtet sein können.

Alternativ oder zusätzlich wird zur Herstellung einer reflektierenden Oberfläche eine der beiden oder werden beide Oberflächen des Reflektors mit einem System optisch dünner Schichten versehen. Dadurch werden vorteilhafterweise sichtbare Strahlungsanteile reflektiert und die unsichtbaren Anteile, insbesondere Wärmestrahlungsanteile, durchgelassen.

Eine weitere bevorzugte Ausführungsform der Erfindung umfasst eine metallische Beschichtung auf einer oder beiden Hauptoberflächen des Reflektors.

In weiterer alternativer Ausgestaltung kann der Reflektor auch ein metallischer Reflektor welcher sowohl unbeschichtet als auch dielektrisch oder metallisch beschichtet sein kann, um die erwünschten spektralen und Korrosionseigenschaften bereitzustellen.

Eine bevorzugte Ausführungsform der Erfindung umfasst einen Stufenlinsenscheinwerfer, bei welchem die lichtreflektierende Oberfläche des Reflektors lichtstreuend strukturiert ist und keine, eine oder zwei Oberflächen der Stufenlinse lichtstreuend strukturiert sind. Hierdurch kommt es zu einem festgelegten Anteil der Überlagerung gestreuten Lichts zu geometrisch-optisch abgebildetem Licht, welcher eine Abbildung der Lampe im Lichtfeld vermeidet. Vorzugsweise weist der Reflektor hierzu Teilflächen oder Facetten auf, welche es ermöglichen, dessen lichtstreuende Anteile definiert zu berechnen und zu fertigen.

Mit zunehmender Verkleinerung der Lichtquelle, etwa auf dem wichtigen Gebiet der digitalen Projektion oder bei Hochleistungs-Entladungslampen kann jedoch ein immer stärker ausgeprägterer mittlerer dunkler Bereich auftreten, welcher mit streuenden Einrichtungen innerhalb des Reflektors nicht oder nur noch mit grossen Lichtverlusten kompensiert werden kann. Auch die herkömmlichen, zur Vermeidung einer Abbildung des Emissionszentrums der Lichtquelle verwendeten streuenden Einrichtungen schaffen hier nur bedingt, wenn überhaupt Abhilfe, da auch hierbei in jeder Stellung des Stufenlinsenscheinwerfers mindestens der dunkle mittige Öffnungskegel homogen ausgeleuchtet werden muss. Gerade hierdurch kommt es jedoch besonders in der Spotstellung zu grossen Lichtverlusten, da hier nur ein dunkler Bereich mit sehr kleinem Öffnungswinkel vorliegt aber bei den herkömmlichen Stufenlinsen mit streuenden Einrichtungen dennoch die volle Fläche der Stufenlinse zur Streuung des Lichtfelds verwendet wird.

Die Erfinder haben herausgefunden, dass diese hohen Lichtverluste auf überraschend einfache Weise vermieden werden können. Besonders vorteilhaft ist es hierbei, wenn die Stufenlinse eine Streuscheibe aufweist, welche in besonders bevorzugter Weise kreisförmig ausgebildet und nur noch im Zentrum der Stufenlinse angeordnet ist.

Bei dieser Ausführungsform können in jeder Stellung des Stufenlinsenscheinwerfers die dunklen Bereiche in der Mitte des Beleuchtungsfelds sehr wirksam vermieden werden, aber es kommt nicht zu den hohen Lichtverlusten in der Spotstellung des Reflektors.

In überraschender Weise zeigt es sich, dass der geometrisch-optische Strahlengang des aus dem Reflektor austretenden Lichts am Ort der Stufenlinse genau dann einen kleineren Bereich ausleuchtet, wenn der benötigte Anteil an gestreutem Licht erhöht ist.

Diese Wirkung haben sich die Erfinder zu nutze gemacht, um mit der Erfindung ein automatisches oder adaptives Lichtmischsystem zu schaffen, welches synchron zu der Verstellung des Stufenlinsenscheinwerfers nur denjenigen Streulichtanteil zum geometrisch-optisch abgebildeten Licht hinzu mischt, welcher für diese Stellung benötigt wird.

Dieses Lichtmischverhältnis, welches nahezu optimal an die jeweils erforderlichen Lichtverteilungen adaptiert werden kann, wird nachfolgend abgekürzt nur noch als Mischverhältnis bezeichnet.

Durch dieses automatische Lichtmischsystem wird im Wesentlichen für jede Stellung des Reflektors das richtige Mischverhältnis und somit stets ein sehr homogen ausgeleuchtetes Lichtfeld geschaffen ohne dass hierbei jedoch unnötige Streuverluste auftreten.

Hierbei kann durch die Wahl des Durchmessers der integrierten Streuscheibe im Verhältnis zur verbleibenden Fläche der Stufenlinse das Mischverhältnis der vollflächig ausgeleuchteten Stufenlinse definiert werden und kann durch die Streueigenschaften der Negativlinse der Öffnungswinkel des gestreuten Lichts definiert werden.

Ferner kann auf der integrierten Streuscheibe selbst die streuende Wirkung variieren, so dass beispielsweise in der Mitte der Streuscheibe stärker streuende Bereiche und an deren Rand weniger stark streuende Bereiche angeordnet sind. Hierdurch wird ein stärker fokussiertes Strahlenbündel zusätzlich noch aufgeweitet und es lassen sich dann extrem breite Ausleuchtungswinkel realisieren.

Alternativ kann auch der Rand der Streuscheibe nicht nur abrupt endend ausgestaltet sein sondern es kann dieser in dessen streuender Wirkung stetig abnehmend gestaltet sein und sich noch unter oder über der Stufenlinse erstrecken. Hierdurch lassen sich weitere Anpassungen an die stellungsabhängigen Mischverhältnisse vornehmen.

Es wird bezug genommen auf die am gleichen Tag eingereichte Anmeldung des selben Anmelders mit dem Titel "Optische Anordnung mit Stufenlinse", deren Offenbarungsgehalt durch Bezugnahme vollständig auch zum Offenbarungsgehalt der vorliegenden Anmeldung gemacht wird.

Erfindungsgemäss ist die Verwendung des Scheinwerfers für Architektur, Medizin, Film, Bühne, Studio und Fotografie sowie in einer Taschenlampe vorgesehen.

Die Streuscheibe kann bei den bevorzugten Ausführungsformen sowohl an der Lichteintritts- als auch an der Lichtaustrittseite angeordnet sein. Ferner besteht die vorteilhafte Möglichkeit, Streuscheiben an der Lichteintritts und an der Lichtaustrittsseite anzuordnen. Bei dieser letztgenannten Ausführungsform können auch verschieden streuende, beispielsweise örtlich verschieden streuende, Streuscheiben verwendet werden.

Die Erfindung wird anhand bevorzugter Ausführungsformen und unter Bezugnahme auf die beigefügten Zeichnungen detaillierter beschrieben.

Es zeigen:
- Fig. 1: eine Ausführungsform des Stufenlinsenscheinwerfers in Spotstellung, wobei der reflektorferne Brennpunkt des Reflektors in etwa mit dem rechtsseitigen virtuellen Brennpunkt der Stufenlinse überlagert ist,
- Fig. 2: die in Fig. 1 gezeigte Ausführungsform des Stufenlinsenscheinwerfers in einer ersten Floodstellung, wobei der reflektorferne Brennpunkt des Reflektors in etwa in einer reflektornahen Oberfläche der Stufenlinse angeordnet ist,
- Fig. 3: die in Fig. 1 gezeigte Ausführungsform des Stufenlinsenscheinwerfers in einer zweiten Floodstellung mit grösserem Öffnungswinkel, wobei der reflektorferne Brennpunkt des Reflektors vor der reflektorfernen Oberfläche der Stufenlinse durch die Stufenlinse abgebildet wird,
- Fig. 4: die in Fig. 1 gezeigte Ausführungsform des Stufenlinsenscheinwerfers in einer dritten Floodstellung mit nochmals grösserem Öffnungswinkel als in der zweiten Floodstellung, wobei der reflektorferne Brennpunkt des Reflektors vor der reflektorfernen Oberfläche der Stufenlinse durch die Stufenlinse abgebildet wird und die Lichtquelle aus dem reflektornahen Brennpunkt heraus auf den Reflektor zu bewegt ist,
- Fig. 5: die in Fig. 1 gezeigte Ausführungsform des Stufenlinsenscheinwerfers in deren zweiten Floodstellung mit grösserem Öffnungswinkel, wobei mittels eines Hilfsreflektors ein weiterer Teil des Lichts zunächst in den Reflektor und von diesem in die Stufenlinse gelenkt wird,
- Fig. 6: eine Negativstufenlinse mit zentral angeordneter Streuscheibe,
- Fig. 7: eine öffnungswinkelabhängige logarithmische Darstellung der Lichtstärke des Stufenlinsenscheinwerfers in dessen Spot- und in einer von dessen Floodstellungen.
- Fig. 8: eine Kennlinie für die Zwangskoppelung zwischen den Größen a und b, wobei die Parameter von Stufenlinse, elliptischem Reflektor und Leuchtkörper beispielhaft gewählt sind.

### Detaillierte Beschreibung bevorzugter Ausführungsformen

Bei der nachfolgenden detaillierten Beschreibung wird unterstellt, dass gleiche Bezugszeichen die gleichen oder gleich wirkende Elemente in den jeweiligen verschiedenen Ausführungsformen bezeichnen.

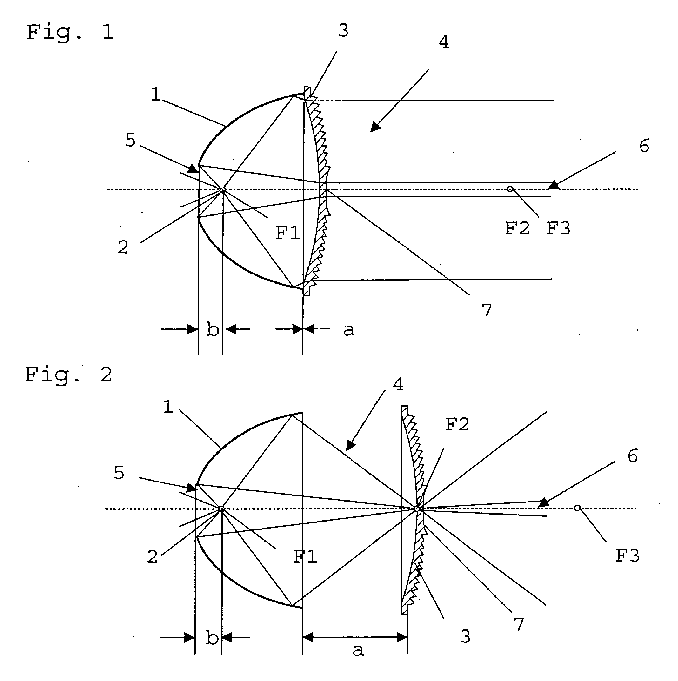

Nachfolgend wird auf Fig. 1 bezug genommen, welche eine Ausführungsform des Stufenlinsenscheinwerfers in Spotstellung zeigt. Der Stufenlinsenscheinwerfer enthält im Wesentlichen einen ellipsoiden Reflektor 1 , eine Lampe 2, welche eine Halogenlampe oder auch eine Entladungslampe sein kann, und eine Stufenlinse 3, welche eine Linse mit negativer Brechkraft, vorzugsweise eine bikonkave Stufenlinse ist.

In Fig. 1 ist der reflektorferne Brennpunkt F2 des ellipsoiden Reflektors 1 in etwa mit dem rechtsseitigen virtuellen oder negativen Brennpunkt F3 der Stufenlinse 3 überlagert.

Das aus dem Scheinwerfer austretende Lichtbündel 4 ist in den Figuren lediglich schematisch durch dessen äussere Randstrahlen angedeutet.

Die Abstände a zwischen Stufenlinse 3 und Vorderkante des Reflektors 1 und b zwischen Lampe 2 und Scheitelpunkt des Reflektors 1 sind ebenfalls in Fig. 1 dargestellt.

Die Spotstellung wird dadurch eingestellt, dass sich die Lampenwendel oder der Entladungsbogen der Lampe 2 im Wesentlichen im reflektorseitigen Brennpunkt F1 des Reflektorellipsoids 1 angeordnet wird.

Das von dem Reflektor 1 reflektierte Licht wird in dieser Stellung nahezu vollständig auf den reflektorfernen Brennpunkt F2 des Ellipsoids 1 gerichtet. Der rechtsseitige negative oder virtuelle Brennpunkt F3 der Stufenlinse 3fällt dann in etwa mit dem Brennpunkt F2 des Reflektorellipsoids 1 zusammen.

Es ist in Fig. 1 im Nahfeld auch zu erkennen, wie sich die Öffnung 5 innerhalb des Reflektors 1 im parallelen Strahlengang des Lichtfelds 4 als dunkler Bereich 6 auswirkt.

Innerhalb der Stufenlinse 3 ist eine kreisförmige, mittig angeordnete Streuscheibe 7 vorgesehen, welche ein definiertes Streulichtverhältnis und einen definierten Öffnungswinkel des gestreuten Lichts erzeugt. Hierdurch wird ein definiertes Mischverhältnis des gestreuten Lichts relativ zu dem durch die Stufenlinse 3 geometrisch-optisch abgebildeten Licht bereitgestellt.

Alternativ zu dieser Ausführungsform der Streuscheibe 7 ändert sich bei einer weiteren Ausführungsform die streuende Wirkung entlang des Radius der Streuscheibe 7 auf stetige Weise, so dass in der Mitte der Streuscheibe 7 stärker streuende Bereiche und an deren abrupt endendem Rand weniger stark streuende Bereiche angeordnet sind.

In nochmals weiterer alternativer Ausgestaltung ist der Rand der Streuscheibe 7 nicht nur abrupt endend sondern es ist dieser in dessen streuender Wirkung stetig abnehmend ausgebildet und kann sich dieser auch unter die oder über der Stufenlinse erstrecken.

Hierdurch werden systemabhängig weitere Anpassungen an die stellungsabhängigen Mischverhältnisse vorgenommen, so dass der Fachmann stets ein optimales Mischungsverhältnis für ein homogen ausgeleuchtetes Lichtfeld oder auch für Lichtfelder mit definiert erzeugten lokal höheren Intensitäten bereitstellen kann.

Es ist aus Fig. 1 ferner zu erkennen, dass in der Spotstellung nur ein geringer Teil des gesamten Lichts, durch die Streuscheibe 7 tritt.

Durch die Streuscheibe 7 kommt es zu einer sehr homogenen Ausleuchtung, wie dies in Fig. 7, welche eine öffnungswinkelabhängige logarithmische Darstellung der Lichtstärke des Stufenlinsenscheinwerfers zeigt, für die Spotstellung mit der Linie 8 wiedergegeben ist.

Fig. 2 zeigt die in Fig. 1 dargestellte Ausführungsform des Stufenlinsenscheinwerfers in einer ersten Floodstellung, bei welcher der reflektorferne Brennpunkt F2 des Reflektors 1 in etwa in einer reflektornahen Oberfläche der Stufenlinse 3 angeordnet ist.

Hierbei wird der Wert der Verschiebung a gegenüber der Spotstellung durch eine mechanische Führung definiert verändert.

Der Aufbau entspricht grundsätzlich dem in Fig. 1 erläuterten Aufbau des Stufenlinsenscheinwerfers.

Jedoch ist aus Fig. 2 deutlich zu erkennen, dass sowohl der Öffnungswinkel des austretenden Lichtstrahlenbündels 4 als auch der des dunklen Bereichs 6 zugenommen hat.

Da in dieser Stellung jedoch ein sehr hoher Anteil des Lichts nur auf einem sehr kleinen Bereich in der Mitte der Streuscheibe 7 auftrifft, kann gerade dieser Bereich so gestaltet werden, dass dessen Vorwärtsstreukeule in etwa den dunklen Bereich 6 im Fernfeld oder Fernbereich in gewünschter Weise kompensiert. Es sei auch auf Fig. 7 verwiesen, welche die Lichtverhältnisse mit der Linie 9 beispielhaft für eine Floodstellung wiedergibt.

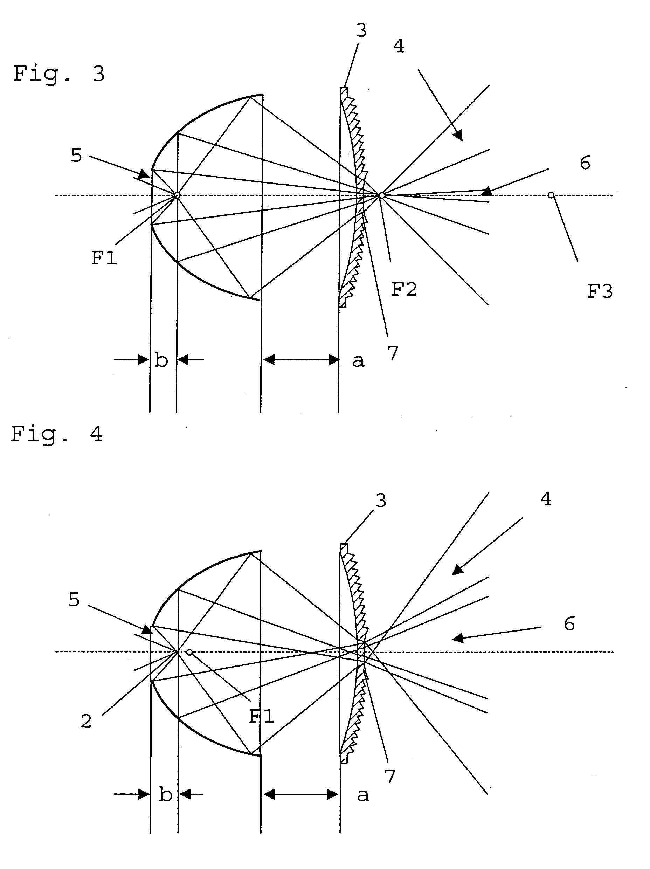

Nachfolgend wird auf Fig. 3 bezug genommen, welche die in Fig. 1 dargestellte Ausführungsform des Stufenlinsenscheinwerfers in einer zweiten Floodstellung mit noch grösserem Öffnungswinkel als in Fig. 2 zeigt, wobei der reflektorferne Brennpunkt F2 des Reflektors 1 vor der reflektorfernen Oberfläche der Stufenlinse 3 durch die Stufenlinse 3 abgebildet wird.

Hierbei wird ein grösserer Bereich der Streuscheibe 7 als in Fig. 2 gezeigt durchleuchtet und kann dessen gesamtes Streuverhalten an die Verhältnisse dieser Floodstellung angepasst werden.

Eine nochmalige Aufweitung des Strahlenbündels 4 erhält man wie in Fig. 4 dargestellt alternativ oder zusätzlich zu der Floodstellung aus Fig. 3 durch Änderung des Abstands b der Lampe 2 zum Reflektor 1. Mit Verschiebung der Lampe 2 zum Reflektor 1 hin wird das den Reflektor verlassende Lichtbündel nochmals stärker gebündelt und es kommt nach dem Austreten aus der Stufenlinse 3 zu erhöhten Austrittswinkeln.

Die Veränderung des Abstands a und auch des Abstands b können bei weiteren Ausführungsformen beispielsweise von Hand, mechanisch, elektrisch, elektronisch oder in Kombination miteinander erfolgen, wobei hierzu eine Axialführung der optischen Komponenten verwendet werden kann.

Damit die Gleichmässigkeit der Beleuchtungsstärke erhalten bleibt, erfolgen die Abstandsveränderungen bei einer besonders bevorzugten Ausführungsform jedoch durch eine zweckmässig gewählte Zwangskoppelung welche die Veränderung von a und b in ein definiertes Verhältnis setzt.

Das über die Zwangskopplung definierte Verhältnis der Größen a und b wird durch die verwendeten Parameter von Stufenlinse, integrierter Streuscheibe, elliptischem Reflektor und Leuchtkörper bestimmt. Die Parameter umfassen dabei die Abmessungen, Geometrie, Struktur und optischen Eigenschaften der einzelnen Bauteile.

Im speziellen umfasst das für die Stufenlinse deren optischer Durchmesser, deren Brennweite, deren Wölbung, deren lichtstreuende Struktur und deren Anordnung auf der Vor- und/oder Rückseite der Stufenlinse; für die in der Stufenlinse integrierte Streuscheibe deren optischer Durchmesser, deren lichtstreuende Struktur und deren Anordnung; für den elliptischen Reflektor dessen optischer Durchmesser, dessen Wölbung, dessen Brennweite, dessen Oberflächenstruktur, den Abstand der beiden Brennpunkte und den Durchmesser der Lampendurchführung und für den Leuchtkörper dessen Form, Abmessungen, Lage und die Art des Leuchtkörpers, beispielsweise ausgebildet als Metalldampf-Entladungslampe, Halogenlampe oder CDM-Lampe. Weitere Einflüsse hier nicht ausdrücklich genannter Parameter sind möglich.

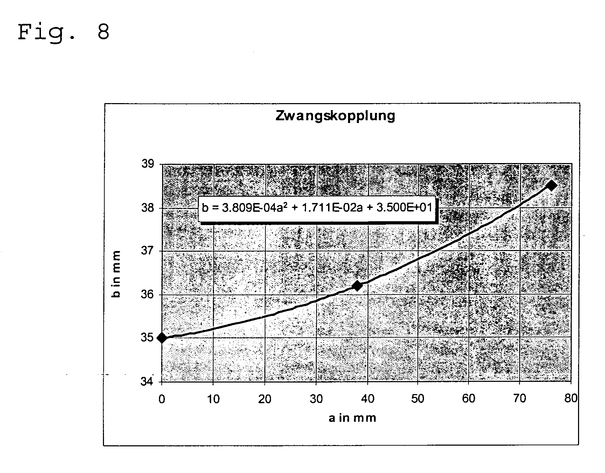

Als Beispiel dazu stellt Fig. 8 eine Kennlinie für die Zwangskoppelung zwischen den Größen a und b dar. Die verwendeten Parameter von Stufenlinse, elliptischem Reflektor und Leuchtkörper sind beispielhaft gewählt:
**Stufenlinse:** mit 160 mm optischem Durchmesser und 108.7 mm negativer Brennweite, integrierte Streuscheibe mit 28 mm Durchmesser im Zentrum (Wabe: Diagonale 3.4 mm, Radius 4 mm, 3° tordiert), Rückseite mit lichtstreuender Struktur;
**Elliptischer Reflektor:** mit 160 mm optischem Durchmesser und 35 mm Brennweite, 160 mm Abstand der beiden Brennpunkte, Lampenführung mit 30 mm Durchmesser;
**Leuchtkörper:** Zylinder in axialer Lage, etwa7.2 mm lang, Durchmesser ca. 2.6 mm.

Eine Veränderung der Parameter führt zu einer Änderung des über die Zwangskopplung definierten Verhältnisses der Größen a und b. Dies resultiert in einer Veränderung des funktionalen Zusammenhangs der die Zwangskopplung charakterisierenden Kennlinie.

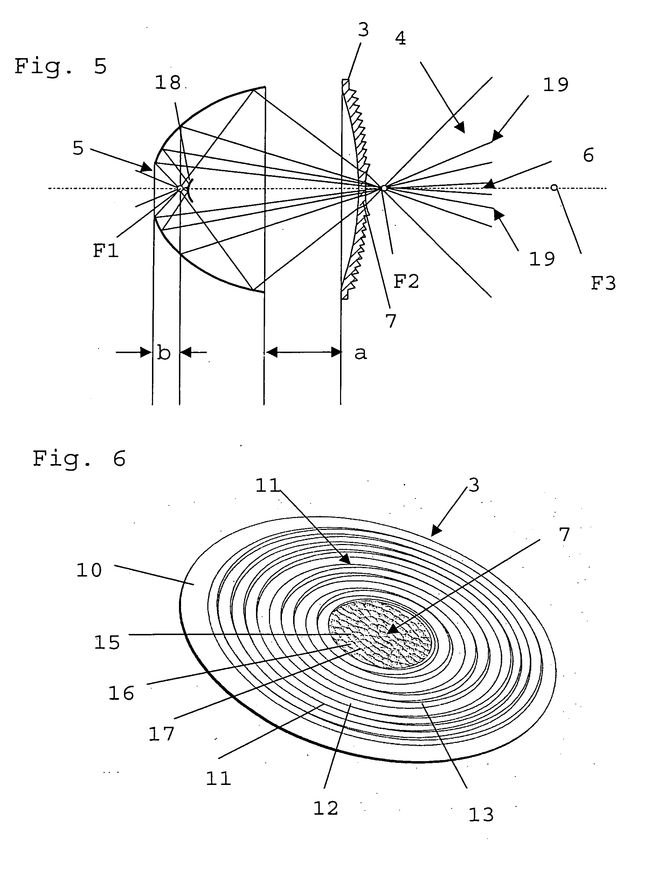

Eine weitere bevorzugte Ausführungsform zeigt Fig. 5. Bei dieser Ausführungsform, die bis auf einen zusätzlichen Hilfsreflektor 18 im wesentlichen den vorstehend beschriebenen Ausführungsformen entspricht, wird durch den Hilfsreflektor 18 Licht der Lampe 2, welches sich in Fig. 5 nach rechts ausbreiten würde und den Reflektor 1 nicht mehr erreichen würde durch Reflexion in den Reflektor 1 gelenkt. Hierdurch kann sowohl das Licht, welches nur beispielhaft durch den Strahlengang 19 dargestellt ist und ohne den Hilfsreflektor nicht zur Beleuchtung beitragen würde genutzt werden sondern es kann auch der ansonsten direkt in die Stufenlinse 3 eintretende Teil des Lichtes besser für die erwünschte Lichtverteilung genutzt werden.

Die Form des Hilfsreflektors 18 ist vorteilhaft so gewählt, dass an diesem reflektiertes Licht nicht wieder in das Leuchtmittel der Lampe 2, beispielsweise eine Wendel oder Entladungszone, eintritt und dieses zusätzlich unnötig erhitzt.

Alternativ kann der Hilfsreflektor 18 auf der Innen- und oder Aussenseite des Glaskörpers der Lampe 2 aufgebracht sein. Hierzu kann das Glas des Lampenkörpers entsprechend geformt sein, um die erwünschte Richtwirkung für das reflektierte Licht zu erreichen.

Fig. 6 zeigt beispielhaft eine Stufenlinse 3 mit Streuscheibe 7, wie diese durch die Erfindung verwendet wird. Die Stufenlinse 3 verfügt über einen transparenten Grundkörper 10 sowie ein Stufenlinsenringsystem 11 mit ringförmigen Linsenabschnitten 11, 12, 13, innerhalb dessen die kreisförmige Streuscheibe 7 angeordnet ist.

Die Streuscheibe 7 ist definiert strukturiert oder verfügt über Facetten 15, 16, 17 mit in weiten Bereichen exakt definierbarem Streuverhalten, welche in der deutschen Patentanmeldung DE 103 43 630.8 des selben Anmelders mit dem Titel "Streuscheibe" beschrieben sind, welche am 19. September beim Deutschen Patent- und Markenamt hinterlegt wurde. Der Offenbarungsgehalt dieser Anmeldung wird durch Bezugnahme auch vollumfänglich zum Offenbarungsgehalt dieser Anmeldung gemacht.

Die Erfindung ist jedoch nicht auf diese vorbeschriebenen Ausführungsformen von Streuscheiben beschränkt.

Besonders vorteilhaft findet der vorstehend beschriebene Stufenlinsenscheinwerfer seinen Einsatz in einem Beleuchtungsset zusammen mit einem gegenüber dem Stand der Technik wesentlich verkleinertem elektrischen Netzteil oder Vorschaltgerät. Dieses Netzteil kann bei gegenüber dem Stand der Technik gleicher nutzbarer Lichtleistung sowohl elektrisch als auch mechanisch kleiner gestaltet sein da der erfindungsgemässe Stufenlinsenscheinwerfer über eine wesentlich höhere Lichtausbeute verfügt. Somit wird weniger Gewicht benötigt und bei Transport und Lagerung geringerer Stauraum beansprucht.

Hierdurch wird aber auch, insbesondere bei Verwendung von Kaltlicht-Reflektoren die gesamte thermische Belastung der beleuchteten Personen und Gegenstände reduziert.

Ferner kann der erfindungsgemäße Stufenlinsenscheinwerfer zur Erhöhung der Lichtausbeute vorteilhaft auch in Taschenlampen verwendet werden, bei welchen die verfügbare elektrische Energie prinzipiell stärker begrenzt ist.

### Bezugszeichenliste

- 1: Reflektor
- 2: Lampe
- 3: Stufenlinse
- 4: austretendes Lichtbündel
- 5: Öffnung im Reflektor 1
- 6: dunkler Bereich
- 7: Streuscheibe
- 8: Intensitätsverteilung in Spotstellung
- 9: Intensitätsverteilung in Floodstellung
- 10: Grundkörper
- 11: Stufenlinsenringsystem
- 12: ringförmige Linsenabschnitte
- 13: dto.
- 14: dto.
- 15: Facette
- 16: dto.
- 17: dto.
- 18: Hilfsreflektor
- 19: durch Hilfsreflektor reflektierter Strahlengang

## Patentansprüche

1. Stufenlinsenscheinwerfer mit einstellbarem Öffnungswinkel des austretenden Lichtbündels mit einem, vorzugsweise ellipsoiden Reflektor, einer Lampe und mindestens einer Stufenlinse,
**dadurch gekennzeichnet,**
**dass** die Stufenlinse eine Linse mit negativer Brennweite, somit eine Negativlinse mit virtuellem Brennpunkt ist.

2. Stufenlinsenscheinwerfer nach Anspruch 1, **dadurch gekennzeichnet, dass** die Stufenlinse einen virtuellen Brennpunkt aufweist, welcher mit einem reflektorfernen Brennpunkt des Reflektors, insbesondere in Spotstellung des Stufenlinsenscheinwerfers, überlagerbar ist.

3. Stufenlinsenscheinwerfer nach Anspruch 1 oder 2, **dadurch gekennzeichnet, dass** die Stufenlinse eine vorzugsweise bikonkave Negativlinse ist.

4. Stufenlinsenscheinwerfer nach Anspruch 1, 2 oder 3, **dadurch gekennzeichnet, dass** die Stufenlinse eine Doppellinse mit chromatisch korrigierten Abbildungseigenschaften umfasst.

5. Stufenlinsenscheinwerfer mit den Merkmalen des Oberbegriffs des Anspruchs 1, insbesondere nach einem der vorstehenden Ansprüche, **gekennzeichnet durch** eine Stufenlinse mit integrierter Streuscheibe.

6. Stufenlinsenscheinwerfer nach Anspruch 5, **dadurch gekennzeichnet, dass** die Streuscheibe kreisförmig ausgebildet und im Zentrum der Stufenlinse angeordnet ist und ein Lichtmischsystem definiert, welches den Anteil des gestreuten Lichts relativ zum dem Anteil des geometrisch-optisch abgebildeten Lichts, somit das Lichtmischverhältnis, in Abhängigkeit von der Stellung des Stufenlinsenscheinwerfers verändert.

7. Stufenlinsenscheinwerfer, **dadurch gekennzeichnet, dass** der Abstand (a) zwischen Stufenlinse und Reflektor zu dem Abstand (b) zwischen Lampe und Reflektor nach Massgabe des einzustellenden Öffnungswinkels des aus dem Scheinwerfer austretenden Lichtbündels in einer definierten geometrischen Abhängigkeit veränderbar ist.

8. Stufenlinsenscheinwerfer nach Anspruch 7, **dadurch gekennzeichnet, dass** der Abstand (b) dadurch einstellbar ist, dass die Lampe bezüglich des Scheitelpunktes des Reflektors verschiebbar angeordnet ist.

9. Stufenlinsenscheinwerfer nach einem der vorstehenden Ansprüche, **dadurch gekennzeichnet, dass** der Reflektor aus einem metallischen oder transparenten, vorzugsweise dielektrischen Material Glas und/oder Kunststoff besteht.

10. Stufenlinsenscheinwerfer nach einem vorstehenden Ansprüche, wobei mindestens eine der beiden Hauptoberflächen des Reflektors mit einem System optisch dünner Schichten versehen ist.

11. Stufenlinsenscheinwerfer nach einem der vorstehenden Ansprüche, **dadurch gekennzeichnet, dass** mindestens eine der beiden Hauptoberflächen des Reflektors mit Metall, vorzugsweise Aluminium, beschichtet ist.

12. Stufenlinsenscheinwerfer nach einem der vorstehenden Ansprüche, wobei die lichtreflektierende Oberfläche des Reflektors, vorzugsweise Teilflächen oder Facetten aufweisend, lichtstreuend strukturiert ist und keine, eine oder zwei Oberflächen der Stufenlinse zusätzlich zur Streuscheibe lichtstreuend strukturiert sind.

13. Stufenlinsenscheinwerfer nach einem der vorstehenden Ansprüche, **dadurch gekennzeichnet, dass** die Stufenlinse eine Negativlinse ist, wie diese in der am gleichen Tag eingereichten deutschen Anmeldung des selben Anmelders mit dem Titel "optische Anordnung mit Stufenlinse" beschrieben und beansprucht ist.

14. Stufenlinsenscheinwerfer nach einem der vorstehenden Ansprüche, **dadurch gekennzeichnet, dass** der Reflektor, die Stufenlinse und/oder die Streuscheibe zumindest einseitig beschichtet sind.

15. Stufenlinsenscheinwerfer nach Anspruch 14, **dadurch gekennzeichnet, dass** die Beschichtung der Stufenlinse ein dielektrisches Interferenz-Schichtsystem umfasst, welches das Spektrum des hindurchtretenden Lichtes verändert.

16. Stufenlinsenscheinwerfer nach einem der vorstehenden Ansprüche, **dadurch gekennzeichnet, dass** die Lampe eine Glühlampe, insbesondere Halogenlampe, ein Leuchtdiode, ein Leuchtdiodenfeld oder eine Gasentladunsglampe ist.

17. Stufenlinsenscheinwerfer nach einem der vorstehenden Ansprüche, **dadurch gekennzeichnet, dass** ein Hilfsreflektor zwischen Stufenlinse und Reflektor angeordnet ist.

18. Stufenlinsenscheinwerfer nach einem der vorstehenden Ansprüche, **dadurch gekennzeichnet, dass** die Stufenlinse an deren Oberfläche vorgespannt, vorzugsweise thermisch vorgespannt ist.

19. Beleuchtungsset umfassend einen Stufenlinsenscheinwerfer nach einem der vorstehenden Ansprüche von 1 bis 18 sowie ein zugeordnetes elektrisches Netzteil oder Vorschaltgerät.

20. Verwendung des Stufenlinsenscheinwerfers nach einem der Ansprüche 1 von bis 18 sowie eines Beleuchtungssets nach Anspruch 19 für Medizin, Architektur, Film, Bühne, Studio und Fotografie.

21. Taschenlampe umfassend einen Stufenlinsenscheinwerfer nach einem der vorstehenden Ansprüche von 1 bis 18.
